(19) Europäisches Patentamt
European Patent Office
Office européen des brevets

(11) EP 4 196 281 B1

(12) **EUROPEAN PATENT SPECIFICATION**

(45) Date of publication and mention of the grant of the patent:
**09.10.2024 Bulletin 2024/41**

(21) Application number: **21762642.3**

(22) Date of filing: **10.08.2021**

(51) International Patent Classification (IPC):
***B03D 1/01*** *(2006.01)*

(52) Cooperative Patent Classification (CPC):
**B03D 1/01;** B03D 2201/02; B03D 2203/04; Y02P 10/20

(86) International application number:
**PCT/EP2021/072215**

(87) International publication number:
**WO 2022/034047 (17.02.2022 Gazette 2022/07)**

(54) **METHOD FOR FLOTATION OF A SILICATE-CONTAINING IRON ORE**

VERFAHREN ZUR FLOTATION EINES SILIKATHALTIGEN EISENERZES

PROCÉDÉ DE FLOTTATION D'UN MINERAI DE FER CONTENANT DU SILICATE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.08.2020 EP 20190413**

(43) Date of publication of application:
**21.06.2023 Bulletin 2023/25**

(73) Proprietor: **BASF SE**
**67056 Ludwigshafen am Rhein (DE)**

(72) Inventors:
- **MICHAILOVSKI, Alexej**
  **67056 Ludwigshafen (DE)**
- **BUDEMBERG, Gabriela**
  **12335-010 Jacarei (BR)**
- **SOBOTKA, Bettina**
  **68623 Lampertheim (DE)**
- **KIERAT, Radoslaw**
  **67056 Ludwigshafen (DE)**

(74) Representative: **BASF IP Association**
**BASF SE**
**GBI-C006**
**67056 Ludwigshafen (DE)**

(56) References cited:
**EP-A2- 0 174 866**
**GB-A- 578 695**
**US-A- 3 817 972**
**US-A- 4 797 202**
**US-A1- 2020 172 767**

- **FARDIS NAKHAEI ET AL: "Reagents types in flotation of iron oxide minerals: A review", MINERAL PROCESSING AND EXTRACTIVE METALLURGY REVIEW, 2 November 2017 (2017-11-02), US, pages 1 - 36, XP055427169, ISSN: 0882-7508, DOI: 10.1080/08827508.2017.1391245**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 196 281 B1

## Description

The present invention relates to a method for manufacturing a concentrate enriched in iron mineral content from an ore, which contains an iron mineral and silicate, by a reverse flotation using a first amine and particularly a mixture of the first amine and a second amine. A further embodiment is a use of the first amine as a flotation collector, particularly of the mixture of the first amine and the second amine as a flotation collector, and a composition of the first amine and the second amine as a flotation collector.

A typical iron ore beneficiation process requires a flotation stage to remove silica ($SiO_2$) from the valuable iron mineral, e.g. oxides like hematite or magnetite, and thus to obtain a high-grade iron mineral concentrate. A high-grade iron mineral concentrate allows to make high quality steel. Removal of $SiO_2$ from different ores by froth flotation in combination with hydrophobic amines is a well-known process. Negatively charged silicate particles can be hydrophobized using suitable amines. Injection of air in a flotation cell leads to formation of hydrophobic gas bubbles, which can transport the hydrophobized silicate particles to the top of the flotation cell. The formed froth, which can be stabilized by a suitable chemical acting as a froth regulator, contains the hydrophobized silicate particles. Finally, the froth will be removed from the top and the enriched mineral is left at the bottom of the flotation cell.

GB 578695 relates to mineral concentrations and a class of reagents for selectively separating acidic minerals from other ore constituents. The reagents for froth flotation are represented by a compound of one of the following general formulae

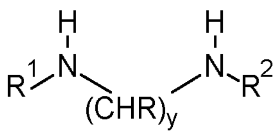
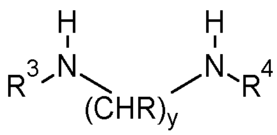
,

wherein y is an integer from 2 to 12, R is hydrogen or an alkyl group, $R^1$ is an alkyl group having from 8 to 30 carbon atoms, or a carboxylic acyl group having from 8 to 32 carbon atoms, $R^2$ is hydrogen or an alkyl group having from 8 to 30 carbon atoms or an alkylol ester or aralkyl group, $R^3$ is a carboxylic acyl group having from 8 to not more than 32 carbon atoms and $R^4$ is an alkyl, alkylol , alkylol ester or aralkyl group or of a salt of such a compound. Test No. 2 discloses a phosphate rock flotation with N-lauryl ethylene diamine hydrobromide and pine oil. A treatment of iron ores for removing silica is mentioned.

DE 1173041 relates to a flotation of oxidic minerals with aliphatic amines as collectors, which are branched aliphatic primary amines having at least 6 carbon atoms and their water- or oilsoluble salts alone or with usual collecting, foaming or regulating auxiliaries. Example 1A discloses a flotation of zinc carbonate and/or zinc phosphate with 2-ethylhexylamine acetate and sodium sulfide. Example 3 discloses a flotation of zinc carbonate and/or zinc silicate with a mixture of 2-ethylhexylamine acetate and 2-ethylhexylamine, an ethoxylated fatty alcohol as an emulgator and sodium sulfide.

EP 0174866 relates to collectors and a process for recovering meal values from a metal ore by subjecting the metal ore, in the form of an aqueous pulp, to a froth flotation process in the presence of a collector, wherein the collector comprises a compound corresponding to the formula

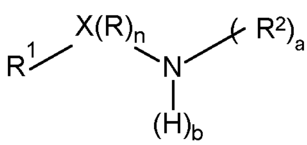
,

wherein R is $-CH_2-$, $-CH(OH)-$, $-CO-$, or a combination thereof and n is an integer from 1 to 6 or $-(R)_n-$ is $-(CH_2)_m-C\equiv$, where m is an integer from 0 to 6, $R^1$ and each $R^2$ are independently $C_{1-22}$ hydrocarbyl or a $C_{1-22}$ hydrocarbyl substituted with one or more hydroxy, amino, phosphonyl, alkoxy, imino, carbamyl, carbonyl, thiocarbonyl, cyano, carboxyl, hydrocarbylthio, hydrocarbyloxy, hydrocarbylamino or hydrocarbylimino groups, with some provisos. Example 1 discloses a froth flotation of a chalcopyrite copper sulfide ore with inter alia N',N'-dibutylethane-1,2-diamine, N',N'-diethylethane-1,2-diamine or N',N'-dihexylethane-1,2-diamine and Dowfroth 250 as a frother. Example 4 discloses a froth flotation of a chalcopyrite copper sulfide ore with inter alia N',N'-dibutylethane-1,2-diamine and Dowfroth as a frother. Example 6 discloses a froth flotation of a nickel/cobalt ore with inter alia N',N'-dibutylethane-1,2-diamine and a frother, e.g. triethoxybutane.

US 2015-0096925 relates to collector compositions and methods for making and using same to purify one or

more crude materials. The collector composition can include one or more amidoamines having the formula as depicted below

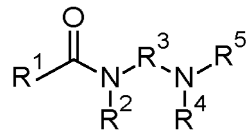

and one or more amines having the formula $R^6$-$NH_2$, where a weight ratio of the amidoamine to the amine can be about 99:1 to about 1:99. In its example 1, a coconut fatty acid diethylenetriamine amidoamine neutralized with glacial acetic acid is used in an inverse flotation of a phosphate ore for removal of silica at a neutral pH. In its example 2, a coconut fatty oil diethylenetriamine amidoamine neutralized with glacial acetic acid is used in an inverse flotation of a phosphate ore for removal of silica at a neutral pH. In its example 3, a tall oil fatty acid diethylenetriamine neutralized with glacial acetic acid is used for an inverse flotation of a phosphate ore for removal of silica at a neutral pH. Other amidoamines similarly employed are lauric acid diethylenetriamine amidoamine and a rosin acid tetraethylenepentamine amidoamine. Some example provide also a combination of an amidoamine with an amine such as an etheramine composed of 95 wt.% of 3-(8-methylnonoxy)propan-1-amine and 3 wt.% of 8-methylnonan-1-ol, such as cocoamine or such as dodecylamine.

F. Nakhaei et al in Miner. Process. Extr. Metall. Rev. (2017) discloses types of amine collectors commonly used in iron flotation, which include fatty diamines.

US 3817972, EP 0174866, GB 578695 and US 4797202 all disclose as well amine derivatives used in flotation, however none of those disclosed are types of amine collectors according to the present invention for use in flotation.

Although US 2020/172767 discloses a dispersion composition containing an approximately 50:50 mixture of n-hexylamine and N,N-diethyl-1,3-diaminopropane, and comprising additionally terpineol and silver particles, said composition is used as an electroconductive adhesive composition and is therefore not suitable for the purpose of the present invention.

There is still a need for improved methods in inverse flotation of ores containing iron mineral and silicate. Especially the quality of ores has been decreasing. With higher $SiO_2$ content in the ore, a selective removal of silicate is more difficult than in the past with ores of a lower $SiO_2$ content. On one side, a loss of iron mineral in the flotation process should be avoided, i.e. a high recovery, and on the other side, $SiO_2$ content should be decreased in a concentrate enriched in iron mineral content to a low level, i.e. selectivity. Especially for direct reduction processes using the concentrate, a low $SiO_2$ content is desirable. Typically, a mine as an ore processing site will set a maximum level of residual $SiO_2$ content that is allowed to remain in the concentrate at the end of the flotation process. This may for instance be 2.5 % by weight, especially 2.0 % by weight. The target is generally to at least achieve this maximum silica level without significantly losing any of the iron mineral content. A better recovery in combination with a comparable or a better selectivity reduces iron mineral losses in the tailings and leads to economic benefits.

It is an object of the present invention to provide a method for manufacturing a concentrate enriched in iron mineral content with a high recovery of iron mineral from the applied ore and a low content of $SiO_2$ from the applied ore. Furthermore, it is attractive if an employed collector allows to reduce or even abstain from a necessity for a specific flotation auxiliary. At the same time, it is an advantage if a material applied in the method can economically be manufactured in a chemically relatively pure and thus homogenous form, for example because less side reactions can occur. A chemically relatively pure material offers via combination with other materials, particularly other co-collectors, a fine-tuned adjustment to a specific ore.

The object is achieved, according to the invention, by a method for manufacturing a concentrate enriched in iron mineral content from an ore, which contains an iron mineral and silicate, by a reverse flotation, which method comprises the step of

(c) adding a first amine to a prepared aqueous pulp of the ore and optionally one or more flotation auxiliaries to obtain an aqueous mixture,
characterized in that the first amine is

(A) a compound of formula I

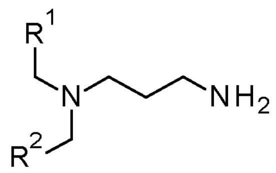 (I)

,

wherein $R^1$ and $R^2$ are independently from each other methyl, ethyl, propyl, 1-methyl-ethyl, butyl, pentyl, hexyl, heptyl or 2-methyl-hexyl, a salt of a protonated compound of formula I and a first anion or a mixture thereof.

Preferably, the method for manufacturing a concentrate enriched in iron mineral content from an ore, which contains an iron mineral and silicate, comprises the steps of

(a) providing the ore, which contains an iron mineral and silicate,
(b) preparing from the provided ore by addition of water and optionally one or more flotation auxiliaries an aqueous pulp,
(c) adding a first amine to the prepared aqueous pulp of the ore and optionally one or more flotation auxiliaries to obtain an aqueous mixture, characterized in that the first amine is

(A) a compound of formula I

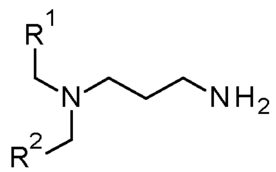 (I)

,

wherein $R^1$ and $R^2$ are independently from each other methyl, ethyl, propyl, 1-methyl-ethyl, butyl, pentyl, hexyl, heptyl or 2-methyl-hexyl, a salt of a protonated compound of formula I and a first anion or a mixture thereof,

(d) aerating the aqueous mixture in a flotation cell to generate a froth, which is enriched in silicate content, and removing the generated froth from the flotation cell,
(e) obtaining from the flotation cell the concentrate enriched in iron mineral content.

The steps (a), (b), (c), (d) and (e) describe more detailed the reverse flotation.
Preferably, a second amine is further added at step (c), which is
(B) a compound of formula II

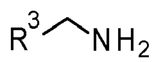 (II)

,

wherein $R^3$ is a $C_5$-$C_{17}$ alkyl, which is branched or linear, or a $C_5$-$C_{17}$ alkenyl, which is branched or linear, a salt of a protonated compound of formula II and a second anion or a mixture thereof.
The ore, which contains an iron mineral and silicate ($SiO_2$), is for example from a magmatic deposit or from a sedimentary deposit. The step (a) of providing an ore results in a provided ore. The step (a) of providing an ore comprises for example a crushing and/or a grinding of the ore. In case of an ore from a magmatic deposit, the step of providing the ore comprises for example also a crushing of the ore and a grinding of the ore. In case of an ore from a sedimentary deposit, the step of providing the ore comprises for example a crushing of the ore, particularly a crushing of the ore and a wet grinding of the ore. A grounded and/or crushed ore is in the form of particles. At the step (a) of providing of the ore, magnetic parts of the ores can be removed by a magnetic treatment, preferably once the ore has been grounded and/or crushed and is in the form of particles. A correlation herein to a weight of the ore or weight parts of the ore refers to dry ore. Preferably, the step (a) of providing of the ore results in a provided ore, which is in the form of particles. Preferably, the provided ore is in the form of particles, which have a particle size allowing 60 wt.% to 100 wt.% of the particles based on the overall weight of the provided ore to pass a 100 $\mu$m steel mesh sieve as measured by standard dry sieving. Preferably, the step (a) of providing of the ore results in a provided ore, which is in the form of particles and more than 90 wt.% of the particles have a particle size of 150 $\mu$m or below. Very preferably, the step (a) of providing of

the ore results in a provided ore, which is in the form of particles, more than 90 wt.% of the particles have a particle size of 150 μm or below and more than 80 wt.% of the particles have a particle size of 106 μm or below. Particularly, the step (a) of providing of the ore results in a provided ore, which is in the form of particles, more than 90 wt.% of the particles have a particle size of 150 μm or below, more than 80 wt.% of the particles have a particle size of 106 μm or below and more than 30 wt.% of the particles have a particle size of 38 μm or below. Very particularly, the step (a) of providing of the ore results in a provided ore, which is in the form of particles, more than 92 wt.% of the particles have a particle size of 150 μm or below, more than 82 wt.% of the particles have a particle size of 106 μm or below and more than 35 wt.% of the particles have a particle size of 38 μm or below.

The ore contains preferably 20 wt.% to 65 wt.% iron atoms based on the overall weight of the ore. The weight content of iron atoms (Fe atoms) is similar to an iron content in weight. The content of iron atoms is determined for example by WDXRF. The ore contains very preferably 25 wt.% to 55 wt.% of iron atoms, particularly 30 wt.% to 50 wt.% and very particularly 35 wt.% to 47 wt.%. An iron mineral is for example an iron oxide. Typical iron oxides are hematite ($Fe_2O_3$ with 69.9% by weight of iron content), magnetite ($Fe_3O_4$ with 72.4% by weight of iron content), goethite (Fe(O)OH with 62.9 by weight of iron content) or a mixture thereof. Preferably, the iron mineral consists out of less than 10 wt.% of an iron sulfide based on the overall weight of all iron minerals in the ore. Very preferably, all iron minerals in the ore are non-sulfidic iron minerals. The iron minerals in the ore consists preferably out of 90 wt.% to 100 wt.% of iron oxide based on the overall weight of all iron minerals in the ore. Very preferably, the iron minerals in the ore consists out of at least 97 wt.% to 100 wt.% of iron oxide, particularly out of 99 wt.% to 100 wt.%.

The ore contains preferably 20 wt.% to 65 wt.% iron atoms and 20 wt.% to 70 wt.% of silicate calculated as $SiO_2$, very preferably 25 wt.% to 55 wt.% iron atoms and 25 wt.% to 55 wt.% of silicate calculated as $SiO_2$, particularly 30 wt.% to 50 wt.% iron atoms and 30 wt.% to 45 wt.% of silicate calculated as $SiO_2$ and very particularly 35 wt.% to 47 wt.% iron atoms and 32 wt.% to 43 wt.% of silicate calculated as $SiO_2$.

A typical ore comprises 40 wt.% to 70 wt.% of hematite and 30 wt.% to 50 wt.% of silicate calculated as $SiO_2$, particularly 45 wt.% to 65 wt.% of hematite and 30 wt.% to 45 wt.% of silicate calculated as $SiO_2$. Preferably, more than 50 wt.% of the iron mineral, which is contained in the ore, is an iron oxide, which is hematite. Very preferably, 70 wt.% to 100 wt.% of the iron mineral, which is contained in the ore, is an iron oxide, which is hematite.

Preferred is a method, wherein the ore contains iron atoms in the range of 20 wt.% to 55 wt.% based on the weight of the ore.

The compound of formula I and the compounds of formula II act in the method as a collector for froth flotation.

The first amine (A) comprises also a mixture of two or more compounds of formula I. Preferably, $R^1$ and $R^2$ are independently from each other methyl, ethyl, propyl, 1-methyl-ethyl, butyl or pentyl. Very preferably, $R^1$ and $R^2$ are independently from each other methyl, ethyl, propyl or 1-methyl-ethyl. Particularly, $R^1$ and $R^2$ are independently from each other methyl, propyl or 1-methyl-ethyl. Very particularly, $R^1$ and $R^2$ are independently from each other methyl or propyl. Preferably, $R^1$ and $R^2$ are the same. Very preferably, $R^1$ and $R^2$ are the same and methyl, ethyl, propyl, 1-methyl-ethyl, butyl or pentyl. Particularly, $R^1$ and $R^2$ are the same and methyl, ethyl, propyl or 1-methyl-ethyl. Very particularly, $R^1$ and $R^2$ are the same and methyl, propyl or 1-methyl-ethyl. Especially, $R^1$ and $R^2$ are the same and methyl or propyl. Very especially, $R^1$ and $R^2$ are propyl.

A compound of formula I, wherein $R^1$ and $R^2$ are propyl, is N',N'-dibutylpropane-1,3-diamine and is depicted below

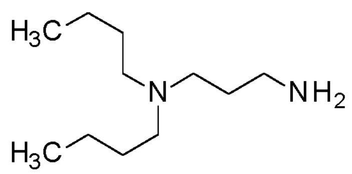 (101)

.

A compound of formula I, wherein $R^1$ and $R^2$ are methyl, is N',N'-diethylpropane-1,3-diamine and is depicted below

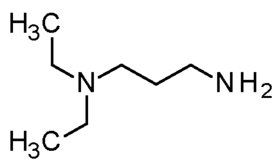 (102)

.

A compound of formula I, wherein $R^1$ and $R^2$ are ethyl, is N',N'-dipropylpropane-1,3-diamine and is depicted

below

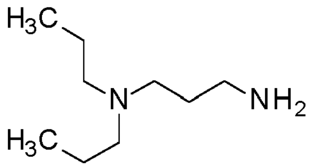
(103)

.

A compound of formula I, wherein $R^1$ and $R^2$ are 1-methyl-ethyl, is N',N'-diisobutylpropane-1,3-diamine and is depicted below

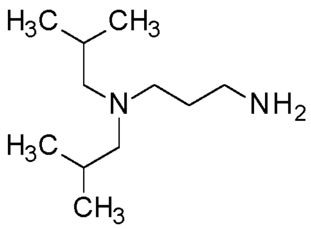
(104)

.

A compound of formula I, wherein $R^1$ and $R^2$ are butyl, is N',N'-dipentylpropane-1,3-diamine and is depicted below

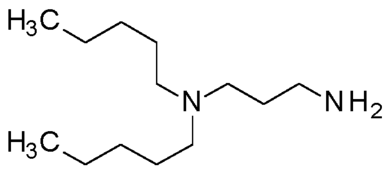
(105)

.

A compound of formula I, wherein $R^1$ and $R^2$ are pentyl, is N',N'-dihexylpropane-1,3-diamine and is depicted below

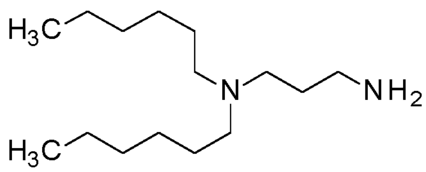
(106)

.

A compound of formula I, wherein $R^1$ and $R^2$ are hexyl, is N',N'-diheptylpropane-1,3-diamine and is depicted below

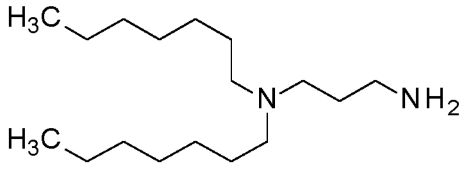
(107)

.

A compound of formula I, wherein $R^1$ and $R^2$ are heptyl, is N',N'-dioctylpropane-1,3-diamine and is depicted below

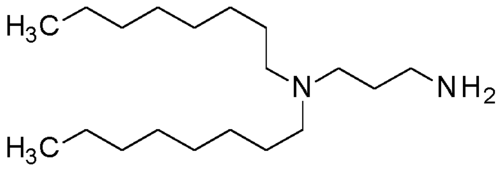

(108)

.

A compound of formula I, wherein $R^1$ and $R^2$ are 2-methyl-hexyl, is N',N'-bis(3-methylheptyl)propane-1,3-diamine and is depicted below

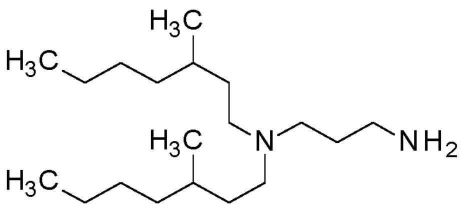

(109)

.

A compound of formula I, wherein $R^1$ is propyl and $R^2$ is methyl, is N'-butyl-N'-ethyl-propane-1,3-diamine and is depicted below

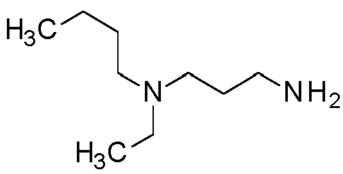

(110)

.

Preferred is a method, wherein $R^1$ and $R^2$ are independently from each other methyl, ethyl, propyl, 1-methylethyl, butyl or pentyl.

Preferred is a method, wherein $R^1$ and $R^2$ are the same.

Preferred is a method, wherein $R^1$ and $R^2$ are propyl.

The second amine (A) comprises also a mixture of two or more compounds of formula II. $R^3$ is for example pentyl, hexyl, heptyl, 1-ethyl-pentyl, octyl, iso-octyl, nonyl, iso-nonyl, decyl, isodecyl, undecyl, iso-undecyl, dodecyl, iso-dodecyl, tridecyl, iso-tridecyl, tetradecyl, iso-tetradecyl, pentadecyl, iso-pentadecyl, hexadecyl, iso-hexadecyl, heptadecyl, iso-heptadecyl, dec-9-en-yl or (Z)-heptadec-8-en-yl. Preferably, $R^3$ is $C_5$-$C_{12}$ alkyl, which is branched or linear, or a $C_{10}$-$C_{17}$ alkenyl, which is branched or linear. Very preferably, $R^3$ is $C_5$-$C_{12}$ alkyl, which is branched or linear, or $C_{17}$ alkenyl, which is linear. Very particularly, $R^3$ is $C_5$-$C_{12}$ alkyl, which is branched or linear. Especially, $R^3$ is $C_5$-$C_9$ alkyl, which is branched or linear. Very especially, $R^3$ is $C_6$-$C_8$ alkyl, which is branched or linear. More especially, $R^3$ is $C_7$ alkyl, which is branched. Most especially, $R^3$ is 1-ethyl-pentyl.

A compound of formula II, wherein $R^3$ is 1-ethyl-pentyl, is 2-ethylhexan-1-amine and is depicted below

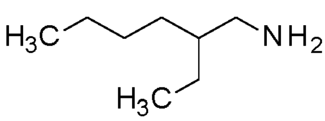

(201)

.

A compound of formula II, wherein $R^3$ is pentyl, is hexan-1-amine and is depicted below

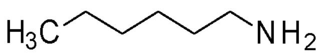

(202)

.

A compound of formula II, wherein $R^3$ is heptadecyl, is octadecan-1-amine and is depicted below

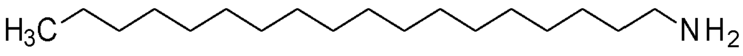
(203)

A compound of formula II, wherein $R^3$ is (Z)-heptadec-8-en-yl, is (Z)-octadec-9-en-1-amine and is depicted below

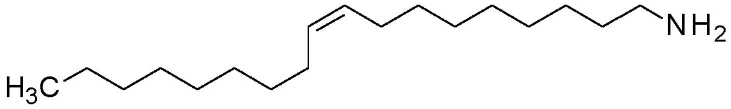
(204)

Preferred is a method, wherein $R^3$ is a $C_7$-$C_{12}$-alkyl, which is branched or linear.

Preferred is a method, wherein $R^3$ is 1-ethyl-pentyl.

Preferred is a method, wherein $R^1$ and $R^2$ are propyl and $R^3$ is 1-ethyl-pentyl.

The first anion is the deprotonated form of an acid A'(-H)p, wherein -H represents an acidic proton and p the number of acidic protons of the acid A'(-H)p. Depending on the acid strength of the acid A'(-H)p, some acidic protons of the acid A'(-H)p might not be deprotonated in a salt with a compound of formula I.

A salt of a protonated compound of formula I and a first anion is also expressed by formulae It1-1+, I-t2-1+ or I-t1-2+

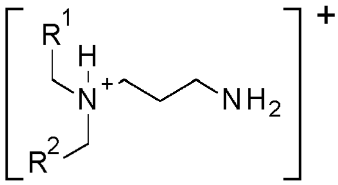
$(A'^{y-})_{1/y}$ (I-t1-1+)

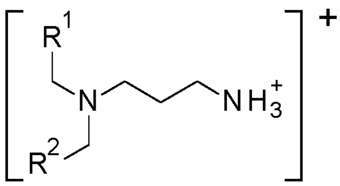
$(A'^{y-})_{1/y}$ (I-t2-1+)

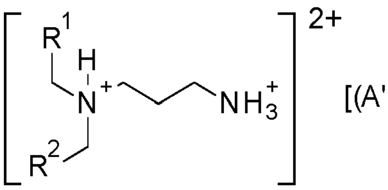
$[(A'^{y-})_{1/y}]_2$ (I-t1-2+)

,

wherein A' represents the first anion, y is an integer, which is at least 1, and y represents the negative charge of the anion. y is not higher than p, which is the number of acidic protons of the acid A(-H)p. Preferred is an anion, which is a deprotonated acid A(-H)p, wherein p is 1, 2 or 3 and y is 1 for p =1, y is 1 or 2 for p = 2 and y is 1, 2, or 3 for p = 3. Formulae I-t1-1+ and I-t2-1+ describe tautomeric forms of the same salt.

The first anion is for example $C_1$-$C_{18}$ carboxylate, fluoride, chloride, bromide, iodide, sulfonate, hydrogensulfate, sulfate, dihydrogenphosphate, hydrogenphosphate, phosphate, nitrate, hydrofluorosilicate, fluorosilicate or a mixture thereof. $C_1$-$C_{18}$ carboxylate is for example an aliphatic or olefinic carboxylate, preferably an aliphatic $C_1$-$C_{13}$ carboxylate, very preferably an aliphatic $C_1$-$C_6$ carboxylate and especially formate, acetate or proprionate. Sulfonate is for example methylsulfonate, ethylsulfonate, propylsulfonate or 1-methylethylsuflonate. Preferably, the sulfonate is an alkyl sulfonate, very preferably a $C_1$-$C_6$ sulfonate, particularly a $C_1$-$C_3$ sulfonate and very particularly methylsulfonate. Preferred is $C_1$-$C_{18}$ carboxylate, fluoride, chloride, sulfonate, hydrogensulfate, sulfate, dihydrogenphosphate, hydrogenphosphate, phosphate or nitrate. Very preferred is aliphatic or olefinic $C_1$-$C_{18}$ carboxylate, particularly preferred is formate, acetate or proprionate.

Preferred is a method, wherein first anion is $C_1$-$C_{18}$ carboxylate, fluoride, chloride, bromide, iodide, sulfonate, hydrogensulfate, sulfate, dihydrogenphosphate, hydrogenphosphate, phosphate, nitrate, hydrofluorosilicate, fluorosilicate or a mixture thereof.

The second anion is the deprotonated form of an acid A"(-H)p, wherein -H represents an acidic proton and p the number of acidic protons of the acid A"(-H)p. Depending on the acid strength of the acid A"(-H)p, some acidic protons of the acid A"(-H)p might not be deprotonated in a salt with a compound of formula II.

A salt of a protonated compound of formula II and a second anion is also expressed by formula II-t1-1+

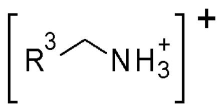 $(A''^{y-})_{1/y}$ (II-t1-1+),

wherein A" represents the second anion, y is an integer, which is at least 1, and y represents the negative charge of the anion. y is not higher than p, which is the number of acidic protons of the acid A"(-H)p. Preferred is an anion, which is a deprotonated acid A"(-H)p, wherein p is 1, 2 or 3 and y is 1 for p =1, y is 1 or 2 for p = 2 and y is 1, 2, or 3 for p = 3.

The second anion is for example $C_1$-$C_{18}$ carboxylate, fluoride, chloride, bromide, iodide, sulfonate, hydrogensulfate, sulfate, dihydrogenphosphate, hydrogenphosphate, phosphate, nitrate, hydrofluorosilicate, fluorosilicate or a mixture thereof. $C_1$-$C_{18}$ carboxylate is for example an aliphatic or olefinic carboxylate, preferably an aliphatic $C_1$-$C_{13}$ carboxylate, very preferably an aliphatic $C_1$-$C_6$ carboxylate and especially formate, acetate or proprionate. Sulfonate is for example methylsulfonate, ethylsulfonate, propylsulfonate or 1-methylethylsuflonate. Preferably, the sulfonate is an alkyl sulfonate, very preferably a $C_1$-$C_6$ sulfonate, particularly a $C_1$-$C_3$ sulfonate and very particularly methylsulfonate. Preferred is $C_1$-$C_{18}$ carboxylate, fluoride, chloride, sulfonate, hydrogensulfate, sulfate, dihydrogenphosphate, hydrogenphosphate, phosphate or nitrate. Very preferred is aliphatic or olefinic $C_1$-$C_{18}$ carboxylate, particularly preferred is formate, acetate or proprionate.

Preferred is a method, wherein the second anion is $C_1$-$C_{18}$ carboxylate, fluoride, chloride, bromide, iodide, sulfonate, hydrogensulfate, sulfate, dihydrogenphosphate, hydrogenphosphate, phosphate, nitrate, hydrofluorosilicate or fluorosilicate.

Preferably, the first anion and the second anion are independently from each other $C_1$-$C_{18}$ carboxylate, fluoride, chloride, bromide, iodide, sulfonate, hydrogensulfate, sulfate, dihydrogenphosphate, hydrogenphosphate, phosphate, nitrate, hydrofluorosilicate or fluorosilicate.

Preferably, the first anion and the second anion are the same. This includes also that in case of a mixture of specific anions, the mixture is the same.

At step c) in case of the presence of the second amine (B), the weight ratio between the first amine (A) and the second amine (B) is preferably in a range from 0.1 to 10. A weight ratio of 0.1 corresponds to 1 weight part of the first amine (A) and 10 weight parts of the second amine (B). A weight ratio of 10 corresponds to 1 weight part of the first amine and 0.1 weight parts of the second amine (B). Very preferably, the weight ratio between the first amine (A) and the second amine (B) is in a range from 0.15 to 5, particularly in a range from 0.18 to 2, very particularly in a range from 0.2 to 1, especially in a range from 0.25 to 0.7 and very especially in a range from 0.3 to 0.5.

Preferred is a method, wherein at step c), the weight ratio between the first amine (A) and the second amine (B) is in a range from 0.1 to 10.

Preferred is a method, wherein at step c), the weight ratio between the first amine (A) and the second amine (B) is in a range from 0.2 to 1.

The first amine (A) is added preferably in an amount of 10 g to 500 g per ton of the ore. In other words, the weight of the first amine (A) is added in an amount, which is in the range from 10 g to 500 g per ton of the ore. The amount is very preferably from 30 g to 300 g per ton of the ore, particularly preferably from 40 g to 250 g per ton of the ore, especially from 50 g to 200 g per ton of the ore and very especially from 60 g to 160 g per ton of the ore. The overall amount of the first amine (A) can be added at once or in portions.

Preferred is a method, wherein the first amine (A) is added in an amount in the range from 10 g to 500 g per ton of the ore.

In case that the second amine (B) is further added, the first amine (A) and the second amine (B) are added preferably in an amount of 10 g to 500 g per ton of the ore. In other words, the sum of the weights of the first amine (A) and of the second amine (B) is added in an amount, which is in the range from 10 g to 500 g per ton of the ore. The amount is very preferably from 30 g to 300 g per ton of the ore, particularly preferably from 40 g to 250 g per ton of the ore, especially from 50 g to 200 g per ton of the ore and very especially from 60 g to 160 g per ton of the ore. The overall amount of the first amine (A) and the second amine (B) can be added at once or in portions.

Preferred is a method, wherein the sum of the weights of the first amine (A) and of the second amine (B) is added in an amount, which is in the range from 10 g to 500 g per ton of the ore.

Preferably, the first amine and the second amine are added at step (c) together in the form of a composition for a use as a flotation collector. The composition comprises

(A) a first amine, which is a compound of formula I, a salt of a protonated compound of formula I and a first anion or a mixture thereof, and

(B) a second amine, which is a compound of formula II, a salt of a protonated compound of formula II and a first anion or a mixture thereof.

Preferably, the sum of the weights of the first amine (A) and of the second amine (B) in the composition is in the range from 50 wt.% to 100 wt.% based on the overall weight of the composition. Very preferably, the range is from 60 wt.% to 100 wt.%, particularly from 70 wt.% to 100 wt.% and very particularly from 80 wt.% to 95 wt.%.

The pH value at the steps (c) and (d) of the method is preferably adjusted with a pH regulator to a specific pH value, typically to a pH value between 8 and 12, particularly between 9 and 11. A pH regulator is typically a strong base, for example sodium hydroxide, potassium hydroxide, sodium carbonate or potassium carbonate. Preferably, the pH value of the aqueous pulp is between 8 and 12, particularly between 9 and 11. Preferably, step (c), i.e. adding the first amine (A) and the second amine (B) to the aqueous pulp, takes place at a pH value between 8 and 12, particularly between 9 and 11. Preferably, the pH value of the aqueous mixture is between 8 and 12, particularly between 9 and 11. Preferably, step (d), i.e. aerating the aqueous mixture, takes place at a pH value between 8 and 12, particularly between 9 and 11. Preferably, (e), i.e. obtaining the concentrate enriched in iron mineral content, takes place at a pH value between 8 and 12, particularly between 9 and 11. A regulation of the pH value supports that the ore, especially the particles of the ore, exhibit the correct surface charge.

Preferred is a method, wherein the pH value at step (c) is between 8 and 12.

Preferred is a method, wherein the pH value at step (c) and at step (b) is between 8 and 12.

Preferred is a method, wherein the pH value at step (c) and at step (d) is between 8 and 12.

Preferred is a method, wherein the pH value at step (c), at step (b) and at step (d) is between 8 and 12.

Preferred is a method, wherein the pH value at step (c), at step (b), at step (d) and at step (e) is between 8 and 12.

A flotation auxiliary is different to a compound of formula I or a compound of formula II. The flotation auxiliary is for example a depressing agent, a froth regulator, a co-collector or an extender oil.

A depressing agent helps to prevent flotation of an ingredient of the ore, which is not desired to get part of the froth or supports in general the selectivity of the method of manufacturing the concentrate. A depressing agent is for example a hydrophilic polysaccharide, particularly a starch, or sodium silicate. The starch is for example a native starch or a modified starch. A native starch is for example a starch from corn, wheat, oat, barley, rice, millet, potato, pea, tapioca or manioc. The native starch is preferably pregelatinized, i.e. warmed for starch gelatination in an aqueous solution, or caustified, i.e. treated with a strong base, for example NaOH, KOH or $Ca(OH)_2$, in an aqueous solution. A modified starch is either a degraded starch, which possesses a reduced weight-average molecular weight versus the original starch, a chemically modified starch or a degraded and chemically modified starch. A degradation of starch is for example possible by oxidation or treatment by acid, base or enzymes. The degradation leads typically to an increased content on oligosaccharides or dextrines. A chemical modification is a functionalization of a starch by covalent linkage of a chemical group to the starch. A chemically modified starch is for example obtainable by esterification or etherification of a starch. The esterification of an acid with a starch is for example performed with an anhydride of the acid or a chloride of the acid. The etherification of a starch is for example possible with an organic reagent, which contains a reactive epoxide functionality. Preferred is a depressing agent, which is a starch, very preferably a native starch, particularly a pregelatinized starch or a caustified starch, especially a caustified starch. A depressing agent is preferably added in an amount of 100 to 3000 g per ton of the ore. The calculation is performed on basis of dry ore. The amount is very preferably from 300 g to 2200 g per ton of the ore, particularly preferably from 400 g to 1500 g per ton of the ore, especially from 500 g to 1100 g per ton of the ore and very especially from 550 g to 800 g per ton of the ore.

A froth regulator helps to improve the efficiency of the method of manufacturing by interfering with the froth generation. A froth property is for example the froth height respectively the volume of the froth or the stability of the froth, i.e. the time to collapse after stop of aerating. A froth regulator is for example pine oil, methylisobutyl carbinol, $C_6$-$C_{12}$ alcohol, particularly 2-ethylhexanol or hexanol, an alcoholic ester, particularly a mixture comprising 2,2,4-trimethyl-1,3-pentandiol-monoisobutyrate, a distillation residue from an oxo-synthesis of 2-ethylhexanol, terpineol, triethoxybutane, an alkoxylated alcohol, particularly an ethoxylated and/or propoxylated alcohol, polyethylene glycol or polypropylene glycol. Preferably, the method is free of using an alkoxylated alcohol, very preferably free of using an alkoxylated alcohol, polyethylene glycol or polypropylene glycol and particularly free of using a froth regulator. It is still attractive, if the method does not require the addition of a froth regulator.

A co-collector is a surface-active compound, which is different to a compound of formula I or a compound formula II. A co-collector is for example cationic, non-ionic or anionic, preferably cationic or non-ionic and very preferably cationic. A cationic co-collector is for example a secondary or tertiary $C_9$-$C_{18}$ alkylamine, which is different to a compound of formula I, 2-($C_9$-$C_{18}$ alkylamino)ethyl-1-amine, N'-($C_9$-$C_{18}$ alkyl)propane-1,3-diamine, 3-($C_9$-$C_{18}$ alkoxy)propyl-1-amine, N'-(3-($C_9$-$C_{18}$ alkoxy)propyl)propane-1,3-diamine. A non-ionic co-collector is for example $C_9$-$C_{15}$ alkyl alcohol, which is branched, or ethoxylated $C_9$-$C_{15}$ alkyl alcohol, which is branched and ethoxylated with 2 to 4 mole ethylene

oxide. In case of a co-collector as a flotation auxiliary, the co-collector might be added together with the first amine (A) and the second amine (B). In this case, this part of step (b) occurs simultaneously with step (c). It is still attractive, if the method does not require the addition of a co-collector.

Preferred is a method, at step (b) one or more flotation auxiliaries are added and one of the flotation auxiliaries is a depressing agent, a froth regulator, a co-collector or an extender oil.

Preferred is a method, wherein a depressing agent is added as a flotation auxiliary and the depressing agent is a starch.

In the method of manufacturing a concentrate, conventional inverse flotation plant equipment may be used. Preferably, the first amine (A) and optionally a flotation auxiliary, which is a co-collector, is or are added to the aqueous pulp, which is already in the flotation cell, which is used for aerating the mixture in step (d). Preferably, the first amine (A) and the second amine (B) and optionally a flotation auxiliary, which is a co-collector, are added to the aqueous pulp, which is already in the flotation cell, which is used for aerating the mixture in step (d).

After adding of a first amine (A) to the aqueous pulp, the obtained aqueous mixture is preferably kept, particularly under stirring, for a conditioning period before aerating the aqueous mixture. This allows the first amine (A) and optionally a flotation auxiliary, which is a co-collector, to condition the ore, particularly the ore particles, in the aqueous mixture. Similarly, after adding of a first amine (A) and a second amine (B) to the aqueous pulp, the obtained aqueous mixture is preferably kept, particularly under stirring, for a conditioning period before aerating the aqueous mixture. This allows the first amine (A) and the second amine (B) and optionally a flotation auxiliary, which is a co-collector, to condition the ore, particularly the ore particles, in the aqueous mixture. The conditioning period lasts for example for one minute or up to 10 or 15 minutes.

At aerating the aqueous mixture, air is typically injected into the base of the flotation cell. Air bubbles are formed and rise to the surface and generate the froth at the surface. The injection of air may be continued until no more froth is formed. This might last for example for one minute or up to 15 or 20 minutes. The froth is removed.

For obtaining the concentrate enriched in iron mineral content, aerating is typically stopped. The concentrate enriched in iron mineral content sinks typically to the bottom of the flotation cell.

In some cases, it may be desirable to treat the concentrate enriched in iron mineral content in a similar manner again. For example, the steps (c) and (d) are repeated as step (d-c) followed by step (d-d) before step (e) is conducted.

The concentrate enriched in iron mineral content contains preferably at least 60% by weight of Fe atoms based on the overall weight of the concentrate enriched in iron mineral content, very preferably at least 65% by weight. The weight of Fe atoms is similar to the weight of iron content. The concentrate enriched in iron mineral content contains preferably less than 2.5% by weight of $SiO_2$ based on the overall weight of the concentrate enriched in iron mineral, very preferably less than 2.1% by weight and particularly preferably 2.0% or less than 1.9% by weight of $SiO_2$. The concentrate enriched in iron mineral content contains preferably at least 60% by weight of Fe atoms and less than 2.5% by weight of $SiO_2$ based on the overall weight of the concentrate enriched in iron mineral content, very preferably at least 65% by weight of Fe atoms and less than 2.1% by weight of $SiO_2$.

The above described preferences for the method of manufacturing a concentrate with its added first amine (A) and preferably the first amine (A) and the second amine (B) are described for the method. These preferences apply also to the further embodiment of the invention.

A further embodiment of the invention is a use of a first amine (A) as a flotation collector for manufacturing a concentrate enriched in iron mineral content from an ore, which contains an iron mineral and silicate, by a reverse flotation, characterized in that the first amine is

(A) a compound of formula I

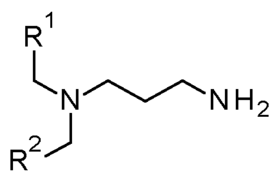 (I)

,

wherein $R^1$ and $R^2$ are independently from each other methyl, ethyl, propyl, 1-methyl-ethyl, butyl, pentyl, hexyl, heptyl or 2-methyl-hexyl, a salt of a protonated compound of formula I and a first anion or a mixture thereof.

Preferably, the use comprises adding the first amine to a prepared aqueous pulp of the ore and optionally one or more flotation auxiliaries to obtain an aqueous mixture.

Preferred is a use, wherein a combination of the first amine (A) and a second amine (B) is used as a flotation collector for manufacturing a concentrate enriched in iron mineral content from an ore, which contains an iron mineral

and silicate, by a reverse flotation, and the second amine (B) is a compound of formula II

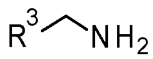 (II),

wherein $R^3$ is a $C_5$-$C_{17}$ alkyl, which is branched or linear, or a $C_5$-$C_{17}$ alkenyl, which is branched or linear, a salt of a protonated compound of formula II and a second anion or a mixture thereof.

Accordingly, the first amine (A) and the second amine (B) are preferably used together as a flotation collector.

Preferably, the use comprises adding the first amine and the second amine to a prepared aqueous pulp of the ore and optionally one or more flotation auxiliaries to obtain an aqueous mixture.

A further embodiment of the invention is a composition for a use as a flotation collector, which comprises

(A) a first amine, which is a compound of formula I

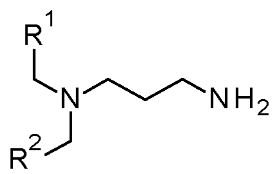 (I)

,

wherein $R^1$ and $R^2$ are independently from each other methyl, ethyl, propyl, 1-methylethyl, butyl, pentyl, hexyl, heptyl or 2-methyl-hexyl, a salt of a protonated compound of formula I and a first anion or a mixture thereof, and

(B) a second amine, which is a compound of formula II

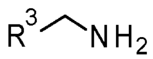 (II),

wherein $R^3$ is a $C_5$-$C_{17}$ alkyl, which is branched or linear, or a $C_5$-$C_{17}$ alkenyl, which is branched or linear, a salt of a protonated compound of formula II and a first anion or a mixture thereof,

wherein the weight ratio between the first amine (A) and the second amine (B) is in a range from 0.2 to 1.

Preferably the composition for a use as a flotation collector according to the present invention is a water-soluble composition.

Preferred is a composition for a use as a flotation collector, wherein the sum of the weights of the first amine (A) and of the second amine (B) is in the range from 50 wt.% to 100 wt.% based on the overall weight of the composition.

The following examples illustrate further the invention without limiting it. Percentage values are percentage by weight if not stated differently.

A) employed chemicals

A-1: Flotigam EDA (RTM, Clariant Ltd), a branched $C_9$-$C_{12}$ ethermonoamine acetate

A-2: 2-ethylhexan-1-amine [CAS-No. 104-75-6], 50 mol% neutralized with acetic acid [acetate salt CAS-No. 67785-97-1]

A-3: N',N'-dibutylpropane-1,3-diamine [CAS-No. 102-83-0], 50 mol% neutralized with acetic acid

A-4: blend of 75 wt.% A-2 and 25 wt.% A-3

A-5: N',N'-dibutylethane-1,2-diamine [CAS-No. 3529-07-7], 50 mol% neutralized with acetic acid

A-6: 3-(N-Octylamino)propyl-1-amine [CAS-No. 7173-57-1]

St-1: causticized starch

6 g corn starch and 52 g of distilled water are added in a 600 mL beaker. 2 g of an aqueous 50 wt.% NaOH solution is added and energetically mixed for 10 minutes until it acquires a gel appearance. 140 g of distilled water are added to the mixture and a homogenization is made with a magnetic stirrer for 5 minutes.

B) Calculation of selectivity

A measure of selectivity for the valuable mineral and against the gangue can be Separation Efficiency (SE) defined as SE = $R_v$-$R_G$, with $R_v$ being recovery of the valuable element and $R_G$ being the recovery of gangue as described in "Separation Efficiency" by Norman F. Schulz, Society of Mining Engineers of AIME, pre-print No. 69-B-44, paper to be presented at the Annual Meeting of the American Institute of Mining, Metallurgical and Petroleum Engineers, Washington, D.C., 1969 (available in digitalized form for example at www.911metallurgist.com/separation-efficiency/). The same calculation can be made from element assays of the concentrate and tailings fraction and represented as

$$SE = 100\frac{c_m}{f}\left[\frac{(f-t)(c-f)}{(c-t)(c_m-f)}\right] = 100\frac{f-t}{c-t}[\frac{c}{f}-\frac{c_m-c}{c_m-f}]$$

where

c: atom content of desired element [wt.%] in the concentrate
$c_m$: atom content of desired element [wt.%] in the mineral being concentrated
f: atom content of desired element [wt.%] in the feed
t: atom content of desired element [wt.%] in the tailings

The value of Separation Efficiency for an ideal separation is 100, however the real values are below that. The closer it is to 100, the better the separation and the recovery of valuable element.

In case of itabirite ore, the desired element is iron (Fe) and the mineral being concentrated is haematite $Fe_2O_3$ with an atom content of iron in the mineral of 69.9%. The gangue in an itabirite ore consists predominantly of quartz ($SiO_2$), which is determined as Si by WDXRF and recalculated as $SiO_2$ in the concentrate. For a calculation of Separation Efficiency, only the iron content of the fraction is used.

C) Flotation

C-1: flotation of a first itabirite type iron ore

A first itabirite type iron ore (45.03 wt.% Fe and 35.36 wt.% $SiO_2$) with iron mainly contained as haematite is ground to a particle size distribution as shown in table C-1-1.

Table C-1-1: particle size distribution of ground itabirite type iron ore

| size range [μm] | >150 | 150-106 | 105-76 | 75-38 | <38 |
|---|---|---|---|---|---|
| wt. fraction [%] | 6.4 | 10.1 | 18.8 | 16.8 | 47.9 |

500 g ground itabirite type iron ore and 400 mL distilled water are placed in a 1.5 L flotation cell in a CDC flotation machine and agitated at 1000 rpm. The slurry is conditioned with the causticized starch solution St-1 corresponding to 665 g starch per ton of dry ore for 5 min. The pH is raised to 10.2 using an aqueous 5 wt.% NaOH solution. Subsequently, 7.5 g of an aqueous 1 wt.% solution of a collector as listed in table C-1-2, which corresponds to 150 g per ton of dry ore, is added to the slurry and conditioned for 1 min. After conditioning, further 550 mL distilled water is added and the slurry aerated at 1 L/min until the completion of the flotation (3 min). The froth fraction is collected and aeration is stopped. The water level is maintained during the entire flotation time. The remaining cell fraction (further described as concentrate) and the separated froth were dried in an oven at 100 °C, weighed, homogenized, and their contents of Fe and Si are determined using WDXRF in a lithium borate fused bead matrix. The Si content is recorded as $SiO_2$. The results are listed in table C-1-2.

Table C-1-2:

| example No. | collector | amount of collector [g/t] | amount of causticized corn starch St-1 [g/t] | Fe recovery [c] [Fe atom weight in %] | Fe conc. grade [d] [Fe atom weight in %] | Si recovery into concentrate [e] [Si atom weight in %] | $SiO_2$ conc. grade [f] [$SiO_2$ weight in %] | separation efficiency [%] |
|---|---|---|---|---|---|---|---|---|
| C-1-1 [a] | A-1 | 150 | 665 | 65 | 68 | 1.5 | 1.3 | 64 |
| C-1-2 [a] | A-2 | 150 | 665 | 61 | 69 | 1.0 | 0.9 | 62 |
| C-1-3 [b] | A-3 | 150 | 665 | 77 | 68 | 1.6 | 1.1 | 75 |
| C-1-4 [b] | A-4 | 150 | 665 | 88 | 66 | 2.0 | 1.4 | 82 |

Footnotes: a) comparative
b) according to invention
c) Fe recovery is the ratio between the overall amount of Fe atom contained in the cell fraction and the overall amount of Fe atom contained in the ore employed as starting material
d) Fe conc. grade means Fe atom content in cell fraction
e) Si recovery is the ratio between the overall amount of Si atom contained in the cell fraction and the overall amount of Si atom contained in the ore employed as starting material
f) $SiO_2$ conc. grade means $SiO_2$ content in cell fraction

The results in table C-1-2 shows that example C-1-4 with its two collectors shows a significantly increased Fe recovery, which is much higher than would be expected from the Fe recoveries of the single collectors at examples C-1-2 and C-1-3. In addition, the $SiO_2$ content stays at a low level, which is in a range as expected from the two single collectors. This is remarkable in view of the significantly increased Fe recovery and leads to the best separation efficiency. Example C-1-3 with its single collector shows still a remarkable separation efficiency.

C-2: flotation of a second itabirite type iron ore

A second itabirite type iron ore (38.4 wt.% Fe and 41.0 wt.% $SiO_2$) with iron mainly contained as haematite is ground to a particle size distribution as shown in table C-2-1.

Table C-2-1: particle size distribution of ground itabirite type iron ore

| size range [$\mu$m] | >400 | 400-213 | 212-151 | 150-107 | 106-64 | 63-38 | <38 |
|---|---|---|---|---|---|---|---|
| wt. fraction [%] | 0.7 | 0.3 | 3.9 | 8.1 | 21.2 | 25.0 | 40.8 |

500 g ground itabirite type iron ore and 400 mL tap water from Ludwigshafen are placed in a 1.2 L flotation cell in a Denver D12 flotation machine and agitated at 1200 rpm. The slurry is conditioned with causticized starch solution St-1 corresponding to 560 g starch per ton of dry ore for 5 min. The pH is raised to 10.5 using an aqueous 10 wt.% NaOH solution. Subsequently, 3.75 mL of an aqueous 1 wt.% solution of a collector as listed in table C-2-2, which corresponds to 75 g per ton of dry ore, is added to the slurry and conditioned for 3 min. After conditioning, further 250 mL tap water from Ludwigshafen is added and the slurry aerated at 100 L/h until the completion of the flotation (3 min). The froth fraction is collected and aeration is stopped. The water level is maintained during the entire flotation time. The pH is reset to 10.5 using aqueous 10 wt.% NaOH solution. 1.25 mL collector solution as above, corresponding to 25 g collector per ton of initial dry ore, are added to the slurry. A subsequent aeration at 100 L/h results in flotation of additional froth phase which is collected in a fresh tray.

The remaining cell fraction (concentrate) and separated froth fractions are dried in an oven at 70 °C, weighed, homogenized, and their content of Fe and Si is determined using WDXRF in a lithium borate fused bead matrix. The Si content is recorded as $SiO_2$. The results are listed in table C-2-2.

Table C-2-2:

| example No. | collector | amount of collector [g/t] | amount of causticized corn starch St-1 [g/t] | Fe recovery c) [Fe atom weight in %] | Fe conc. grade d) [Fe atom weight in %] | Si recovery into concentrate e) [Si atom weight in %] | $SiO_2$ conc. grade f) [$SiO_2$ weight in %] | separation efficiency [%] |
|---|---|---|---|---|---|---|---|---|
| C-2-1 a) | A-1 | 75 + 25 | 560 | 82 | 66 | 0.5 | 0.5 | 76 |
| C-2-2 a) | A-2 | 75 + 25 | 560 | 85 | 63 | 10.0 | 8.1 | 73 |
| C-2-3 b) | A-3 | 75 + 25 | 560 | 83 | 66 | 0.5 | 0.4 | 78 |
| C-2-4 b) | A-4 | 75 + 25 | 560 | 87 | 66 | 1.6 | 1.4 | 81 |

Footnotes: a) comparative
b) according to invention
c) Fe recovery is the ratio between the overall amount of Fe atom contained in the cell fraction and the overall amount of Fe atom contained in the ore employed as starting material
d) Fe conc. grade means Fe atom content in cell fraction
e) Si recovery is the ratio between the overall amount of Si atom contained in the cell fraction and the overall amount of Si atom contained in the ore employed as starting material
f) $SiO_2$ conc. grade means $SiO_2$ content in cell fraction

The results in table C-2-2 shows that example C-2-4 with its two collectors shows an increased Fe recovery, which is higher than would be expected from the Fe recoveries of the single collectors at examples C-2-2 and C-2-3. In addition, the $SiO_2$ content stays at a low level, which would not have been expected from the single collector A-2 at example C-2-2. This is remarkable in view of the increased Fe recovery and leads to the best separation efficiency. Example C-2-3 with its single collector shows still a remarkable separation efficiency.

C-3: flotation of a third itabirite type iron ore

A third itabirite type iron ore (40.3 wt.% Fe and 40.6 wt.% $SiO_2$) containing minor amounts of muscovite ($KAl_2(OH,F)_2[AlSi_3O_{10}]$) and kaolinite ($Al_4[(OH)_8[Si_4O_{10}]$), with iron mainly contained as haematite, is ground to a particle size distribution as shown in table C-3-1.

Table C-3-1: particle size distribution of ground itabirite type iron ore

| size range [μm] | >400 | 400-213 | 212-151 | 150-107 | 106-64 | 63-38 | <38 |
|---|---|---|---|---|---|---|---|
| wt. fraction [%] | <0.1 | 1.8 | 6.1 | 9.2 | 20.7 | 22.0 | 40.1 |

500 g ground ore and 400 mL Ludwigshafen tap water are placed in a 1.2 L transparent plexiglass flotation cell in a Denver D12 flotation machine and agitated at 1200 rpm. The slurry is conditioned with causticized starch solution St-1 corresponding to 560 g starch per ton of dry ore for 5 min. The pH is raised to 9.8 using an aqueous 10 wt.% NaOH solution. Subsequently, 3.75 mL of an aqueous 1 wt.% solution of a collector as listed in table C-3-2, which corresponds to 75 g per ton of dry ore, is added to the slurry and conditioned for 3 min. After conditioning, further 250 mL Ludwigshafen tap water is added and the slurry is aerated at 100 L/h until the completion of the flotation (3 min). The froth fraction is collected in a tray. The pH is monitored and maintained within the range of 9.4 to 9.7 by dropwise addition of aqueous 10 wt.% NaOH solution as necessary. The water level is maintained approximately constant during the entire flotation time. After the completion of froth formation, the pH is reset to 9.8 using an aqueous 10 wt.% NaOH solution. 1.25 mL of an aqueous 1 wt.% aqueous solution of a collector as listed in table C-3-2, which corresponds to 25 g per ton of initial dry ore, is added to the pulp and conditioned at 1200 rpm for 1 min. Subsequently the froth is aerated at 100 L/h until the completion of the flotation (appr. 2.5 min). The aeration is stopped. The remaining cell fraction (concentrate) and combined froth fractions are dried in an oven at 70 °C, weighed, homogenized, and their contents of Fe and Si are determined using WDXRF in a lithium borate fused bead matrix. The Si content is recorded as $SiO_2$.The results are listed in table C-3-2.

Table C-3-2:

| example No. | collector | amount of collector [g/t] | amount of causticized corn starch St-1 [g/t] | Fe recovery c) [Fe atom weight in %] | Fe conc. grade d) [Fe atom weight in %] | Si recovery into concentrate e) [Si atom weight in %] | $SiO_2$ conc. grade f) [$SiO_2$ weight in %] | separation efficiency [%] |
|---|---|---|---|---|---|---|---|---|
| C-3-1 b) | A-3 | 75 + 25 | 560 | 77 | 68 | 1.0 | 0.9 | 74 |
| C-3-2 a) | A-5 | 75 + 25 | 560 | 69 | 67 | 3.9 | 3.7 | 65 |

Footnotes: a) comparative
b) according to invention
c) Fe recovery is the ratio between the overall amount of Fe atom contained in the cell fraction and the overall amount of Fe atom contained in the ore employed as starting material
d) Fe conc. grade means Fe atom content in cell fraction
e) Si recovery is the ratio between the overall amount of Si atom contained in the cell fraction and the overall amount of Si atom contained in the ore employed as starting material
f) $SiO_2$ conc. grade means $SiO_2$ content in cell fraction

The results in table C-3-2 shows that example C-3-1 with its single collector A-3 shows an increased Fe recovery in comparison to example C-3-2 with its single collector A-5. In addition, the $SiO_2$ content is lower. Both contribute to a better separation efficiency. This is remarkable in view of the structural difference between A-3 and A-5 is only an additional $CH_2$-unit at A-3, i.e. A-3 is a propylene-1,3-diamine derivative and A-5 is an ethylene-1,2-diamine derivative.

C-4: flotation of a fourth itabirite type iron ore

A fourth itabirite type ore (41,9% Fe and 41,0 % $SiO_2$) containing minor amount of kaolinite and muscovite (<2% each), with iron mainly contained as haematite, is ground to a particle size distribution as shown in table C-4-1.

Table C-4-1: particle size distribution of ground itabirite type iron ore

| size range [μm] | 400-213 | 212-151 | 150-107 | 106-90 | 89-64 | 63-38 | <38 |
|---|---|---|---|---|---|---|---|
| wt. fraction [%] | 1.8 | 6.1 | 9.2 | 5.3 | 15.4 | 22 | 40.1 |

500 g ground ore and 400 mL Ludwigshafen tap water are placed in an 1.2 L transparent plexiglass flotation cell in a Denver D12 flotation machine and agitated at 1200 rpm. The slurry is conditioned with causticized starch solution as prepared above, corresponding to 560 g starch per ton of solid ore, for 5 min. The pH was raised to 9.8 using a 10 wt% aqueous NaOH solution. Subsequently, 1 wt% aqueous solution of a collector is added to the slurry and conditioned for 3 min.

After conditioning, further 250 mL Ludwigshafen tap water is added and the slurry is aerated at 100 L/h until the completion of the flotation (3 min). The froth fraction is collected in a tray. The pH is monitored and maintained within the range of 9.4-9.7 by dropwise addition of 10% wt NaOH solution as necessary. The water level was maintained approximately constant during the entire flotation time.

After the completion of froth formation, aeration is stopped. The remaining cell fraction (further described as concentrate) and froth fraction are dried in an oven at 70°C, weighed, homogenized, and their content of Fe and Si are determined using WDXRF in a lithium borate fused bead matrix. The Si content is recorded as $SiO_2$. The results are listed in table C-4-2.

Table C-4-2:

| example No. | collector | amount of collector [g/t] | amount of causticized corn starch St-1 [g/t] | Fe recovery c) [Fe atom weight in %] | Fe conc. Grade in cell d.1) [Fe atom weight in %] | Fe conc. grade in tailings d.2) [Fe atom weight in %] | Si recovery into concentrate e) [Si atom weight in %] | $SiO_2$ conc. grade f) [$SiO_2$ weight in %] | separation efficiency [%] |
|---|---|---|---|---|---|---|---|---|---|
| C-4-1 b) | A-3 | 75 | 560 | 83.0 | 66.8 | 13.2 | 1,6 | 1,4 | 72,8. |
| C-4-2 b) | A-4 | 75 | 560 | 86.9 | 65.76 | 10.02 | 12,4 | 9,2 | 81.0 |
| C-4-3 a) | A-5 | 75 | 560 | 74.5 | 65.30 | 19.28 | 7,1 | 6,1 | 66.9 |
| C-4-4 a) | A-6 | 75 | 560 | 37.1 | 68.63 | 34.13 | ~0 | 0,2 | 29.7 |

Footnotes: a) comparative
b) according to invention
c) Fe recovery is the ratio between the overall amount of Fe atom contained in the cell fraction and the overall amount of Fe atom contained in the ore employed as starting material
d.1) Fe conc. grade means Fe atom content in cell fraction
d.2) Fe conc. grade means Fe atom content in tailing fraction
e) Si recovery is the ratio between the overall amount of Si atom contained in the cell fraction and the overall amount of Si atom contained in the ore employed as starting material
f) $SiO_2$ conc. grade means $SiO_2$ content in cell fraction

The results in table C-4-2 shows that example C-4-1 with its single collector A-3 shows an increased Fe recovery in comparison to example C-4-3 with its single collector A-5. In addition, the $SiO_2$ content is lower. Both contribute to a better separation efficiency. As mentioned already above for example C.3, this is remarkable in view of the structural difference between A-3 and A-5. Further, A-6 is a powerful but unselective silica collector resulting in high grade iron concentrate but very high iron losses into tailings.

## Claims

1. A method for manufacturing a concentrate enriched in iron mineral content from an ore, which contains an iron mineral and silicate, by a reverse flotation, which method comprises the step of
(c) adding a first amine to a prepared aqueous pulp of the ore and optionally one or more flotation auxiliaries to obtain an aqueous mixture,
**characterized in that** the first amine is

   (A) a compound of formula I

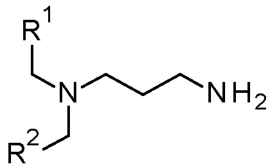

(I)

,

   wherein $R^1$ and $R^2$ are independently from each other methyl, ethyl, propyl, 1-methyl-ethyl, butyl, pentyl, hexyl, heptyl or 2-methyl-hexyl, a salt of a protonated compound of formula I and a first anion or a mixture thereof.

2. A method according to claim 1, which method comprises the steps of

   (a) providing the ore, which contains an iron mineral and silicate,
   (b) preparing from the provided ore by addition of water and optionally one or more flotation auxiliaries an aqueous pulp,
   (c) adding

      (A) a first amine, which is a compound of formula I

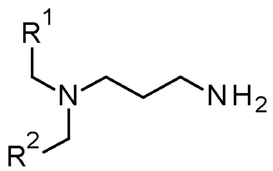

(I)

,

      wherein $R^1$ and $R^2$ are independently from each other methyl, ethyl, propyl, 1-methyl-ethyl, butyl, pentyl, hexyl, heptyl or 2-methyl-hexyl, a salt of a protonated compound of formula I and a first anion or a mixture thereof, to the prepared aqueous pulp of the ore and optionally one or more flotation auxiliaries to obtain an aqueous mixture,

   (d) aerating the aqueous mixture in a flotation cell to generate a froth, which is enriched in silicate content, and removing the generated froth from the flotation cell,
   (e) obtaining from the flotation cell the concentrate enriched in iron mineral content.

3. A method according to claim 1 or 2, wherein

   at step (c) a second amine is further added, which is
   (B) a compound of formula II

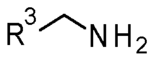 (II)

,

wherein $R^3$ is a $C_5$-$C_{17}$ alkyl, which is branched or linear, or a $C_5$-$C_{17}$ alkenyl, which is branched or linear, a salt of a protonated compound of formula II and a second anion or a mixture thereof.

**4.** A method according to any preceding claim, wherein $R^1$ and $R^2$ are independently from each other methyl, ethyl, propyl, 1-methyl-ethyl, butyl or pentyl, preferably propyl.

**5.** A method according to any claim 3 to 5, wherein $R^3$ is a $C_7$-$C_{12}$ alkyl, which is branched or linear, preferably 1-ethyl-pentyl.

**6.** A method according to any preceding claim, wherein the first anion is $C_1$-$C_{18}$ carboxylate, fluoride, chloride, bromide, iodide, sulfonate, hydrogensulfate, sulfate, dihydrogenphosphate, hydrogenphosphate, phosphate, nitrate, hydrofluorosilicate, fluorosilicate or a mixture thereof.

**7.** A method according to any claim 3 to 6, wherein the second anion is $C_1$-$C_{18}$ carboxylate, fluoride, chloride, bromide, iodide, sulfonate, hydrogensulfate, sulfate, dihydrogenphosphate, hydrogenphosphate, phosphate, nitrate, hydrofluorosilicate, fluorosilicate or a mixture thereof.

**8.** A method according to any preceding claim, wherein all iron minerals in the ore are non-sulfidic iron minerals.

**9.** A method according to any preceding claim, wherein the iron mineral in the ore contains an iron oxide.

**10.** A method according to claim 9, wherein the iron mineral contains hematite, magnetite or goethite or a mixture of two or three thereof.

**11.** A method according to any preceding claim, wherein at step (b) one or more flotation auxiliaries are added and one of the flotation auxiliaries is a depressing agent, a froth regulator, a co-collector or an extender oil.

**12.** A method according to claim 11, wherein a depressing agent is added as a flotation auxiliary and the depressing agent is a starch.

**13.** Use of a first amine (A) as a flotation collector for manufacturing a concentrate enriched in iron mineral content from an ore, which contains an iron mineral and silicate, by a reverse flotation, **characterized in that** the first amine (A) is a compound of formula I, a salt of a protonated compound of formula I and a first anion or a mixture thereof as defined in claim 1.

**14.** Use according to claim 13, wherein a combination of the first amine (A) and a second amine (B) is used as a flotation collector for manufacturing a concentrate enriched in iron mineral content from an ore, which contains an iron mineral and silicate, by a reverse flotation, and the second amine (B) is a compound of formula II, a salt of a protonated compound of formula II or a mixture thereof as defined in claim 3.

**15.** A non-adhesive composition for a use as a flotation collector, which comprises

(A) a first amine, which is a compound of formula I, a salt of a protonated compound of formula I and a first anion or a mixture thereof as defined in claim 1, and
(B) a second amine, which is a compound of formula II, a salt of a protonated compound of formula II and a first anion or a mixture thereof as defined in claim 3,

wherein the weight ratio between the first amine (A) and the second amine (B) is in a range from 0.2 to 1.

## Patentansprüche

**1.** Verfahren zur Herstellung eines Konzentrats mit angereichertem Eisenmineralgehalt aus einem Erz, das ein Eisenmineral und Silicat enthält, durch umgekehrte Flotation, wobei das Verfahren den folgenden Schritt umfasst:

(c) Zugeben eines ersten Amins zu einer hergestellten wässrigen Trübe des Erzes und gegebenenfalls eines oder mehrerer Flotationshilfsmittel unter Erhalt einer wässrigen Mischung, **dadurch gekennzeichnet, dass** es sich bei dem ersten Amin um

(A) eine Verbindung der Formel I

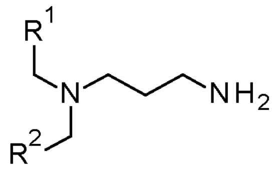 (I)

,

wobei $R^1$ und $R^2$ unabhängig voneinander für Methyl, Ethyl, Propyl, 1-Methylethyl, Butyl, Pentyl, Hexyl, Heptyl oder 2-Methylhexyl stehen, ein Salz einer protonierten Verbindung der Formel I und eines ersten Anions oder eine Mischung davon handelt.

**2.** Verfahren nach Anspruch 1, welches zusätzlich folgende Schritte umfasst:

(a) Bereitstellen des Erzes, das ein Eisenmineral und Silicat enthält,
(b) Herstellen einer wässrigen Trübe aus dem bereitgestellten Erz durch Zugabe von Wasser und gegebenenfalls einem oder mehreren Flotationshilfsmitteln,
(c) Zugeben von

(A) einem ersten Amin, bei dem es sich um eine Verbindung der Formel I

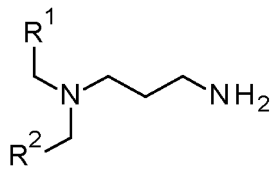 (I)

,

wobei $R^1$ und $R^2$ unabhängig voneinander für Methyl, Ethyl, Propyl, 1-Methylethyl, Butyl, Pentyl, Hexyl, Heptyl oder 2-Methylhexyl stehen, ein Salz einer protonierten Verbindung der Formel I und eines ersten Anions oder eine Mischung davon handelt, zu der hergestellten wässrigen Trübe des Erzes und gegebenenfalls eines oder mehrerer Flotationshilfsmittel unter Erhalt einer wässrigen Mischung,

(d) Belüften der wässrigen Mischung in einer Flotationszelle zur Erzeugung eines Schaums mit angereichertem Silicatgehalt und Entfernen des erzeugten Schaums aus der Flotationszelle,
(e) Erhalten des Konzentrats mit angereichertem Eisenmineralgehalt aus der Flotationszelle.

**3.** Verfahren nach Anspruch 1 oder 2, wobei in Schritt (c) ferner ein zweites Amin zugegeben wird, bei dem es sich um

(B) eine Verbindung der Formel II

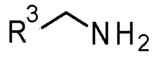 (II)

,

wobei $R^3$ für ein $C_5$-$C_{17}$-Alkyl, das verzweigt oder linear ist, oder ein $C_5$-$C_{17}$-Alkenyl, das verzweigt oder linear ist, ein Salz einer protonierten Verbindung der Formel II und eines zweiten Anions oder eine Mischung davon handelt.

**4.** Verfahren nach einem der vorhergehenden Ansprüche, wobei $R^1$ und $R^2$ unabhängig voneinander für Methyl, Ethyl, Propyl, 1-Methylethyl, Butyl oder Pentyl, vorzugsweise Propyl, stehen.

**5.** Verfahren nach einem der Ansprüche 3 bis 5, wobei $R^3$ für ein $C_7$-$C_{12}$-Alkyl, das verzweigt oder linear ist, vorzugsweise 1-Ethylpentyl, steht.

**6.** Verfahren nach einem der vorhergehenden Ansprüche, wobei es sich bei dem ersten Anion um $C_1$-$C_{18}$-Carboxylat, Fluorid, Chlorid, Bromid, Iodid, Sulfonat, Hydrogensulfat, Sulfat, Dihydrogenphosphat, Hydrogenphosphat, Phosphat, Nitrat, Hydrofluorosilicat, Fluorosilicat oder eine Mischung davon handelt.

**7.** Verfahren nach einem der Ansprüche 3 bis 6, wobei es sich bei dem zweiten Anion um $C_1$-$C_{18}$-Carboxylat, Fluorid, Chlorid, Bromid, Iodid, Sulfonat, Hydrogensulfat, Sulfat, Dihydrogenphosphat, Hydrogenphosphat, Phosphat, Nitrat, Hydrofluorosilicat, Fluorosilicat oder eine Mischung davon handelt.

**8.** Verfahren nach einem der vorhergehenden Ansprüche, wobei es sich bei allen Eisenmineralien in dem Erz um nichtsulfidische Eisenmineralien handelt.

**9.** Verfahren nach einem der vorhergehenden Ansprüche, wobei das Eisenmineral in dem Erz ein Eisenoxid enthält.

**10.** Verfahren nach Anspruch 9, wobei das Eisenmineral Hämatit, Magnetit oder Goethit oder eine Mischung von zwei oder drei davon enthält.

**11.** Verfahren nach einem der vorhergehenden Ansprüche, wobei in Schritt (b) ein oder mehrere Flotationshilfsmittel zugegeben werden und es sich bei einem der Flotationshilfsmittel um einen Drücker, einen Schaumregulator, einen Cosammler oder eine Strecköl handelt.

**12.** Verfahren nach Anspruch 11, wobei ein Drücker als Flotationshilfsmittel zugegeben wird und es sich bei dem Drücker um eine Stärke handelt.

**13.** Verwendung eines ersten Amins (A) als Flotationssammler zur Herstellung eines Konzentrats mit angereichertem Eisenmineralgehalt aus einem Erz, das ein Eisenmineral und Silicat enthält, durch umgekehrte Flotation, **dadurch gekennzeichnet, dass** es sich bei dem ersten Amin (A) um eine Verbindung der Formel I, ein Salz einer protonierten Verbindung der Formel I und eines ersten Anions oder eine Mischung davon gemäß Anspruch 1 handelt.

**14.** Verwendung nach Anspruch 13, wobei eine Kombination des ersten Amins (A) und eines zweiten Amins (B) als Flotationssammler zur Herstellung eines Konzentrats mit angereichertem Eisenmineralgehalt aus einem Erz, das ein Eisenmineral und Silicat enthält, durch umgekehrte Flotation verwendet wird und wobei es sich bei dem zweiten Amin (B) um eine Verbindung der Formel II, ein Salz einer protonierten Verbindung der Formel II oder eine Mischung davon gemäß Anspruch 3 handelt.

**15.** Nichtadhäsive Zusammensetzung zur Verwendung als Flotationssammler, die Folgendes umfasst:

(A) ein erstes Amin, bei dem es sich um eine Verbindung der Formel I, ein Salz einer protonierten Verbindung der Formel I und eines ersten Anions oder eine Mischung davon gemäß Anspruch 1 handelt, und
(B) ein zweites Amin, bei dem es sich um eine Verbindung der Formel II, ein Salz einer protonierten Verbindung der Formel II und eines ersten Anions oder eine Mischung davon gemäß Anspruch 3 handelt,

wobei das Gewichtsverhältnis zwischen dem ersten Amin (A) und dem zweiten Amin (B) in einem Bereich von 0,2 bis 1 liegt.

## Revendications

**1.** Procédé pour la fabrication d’un concentré enrichi en un contenu de minéral de fer à partir d’un minerai, qui contient un minéral de fer et du silicate, par une flottation inverse, lequel procédé comprenant l’étape de (c) ajout d’une première amine à une pulpe aqueuse préparée du minerai et éventuellement un ou plusieurs auxiliaires de flottation pour obtenir un mélange aqueux, **caractérisé en ce que** la première amine est

(A) un composé de formule I

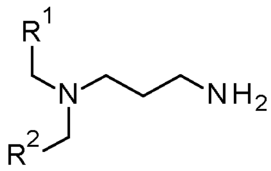 (I)

,

$R^1$ et $R^2$ étant indépendamment l'un de l'autre méthyle, éthyle, propyle, 1-méthyl-éthyle, butyle, pentyle, hexyle, heptyle ou 2-méthyl-hexyle, un sel d'un composé de formule I protoné et un premier anion ou un mélange correspondant.

**2.** Procédé selon la revendication 1, lequel procédé comprenant les étapes de

(a) fourniture du minerai, qui contient un minéral de fer et du silicate,
(b) préparation, à partir du minerai fourni par ajout d'eau et éventuellement d'un ou plusieurs auxiliaires de flottation, d'une pulpe aqueuse,
(c) ajout

(A) d'une première amine, qui est un composé de formule I

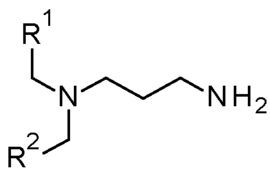 (I)

,

$R^1$ et $R^2$ étant indépendamment l'un de l'autre méthyle, éthyle, propyle, 1-méthyl-éthyle, butyle, pentyle, hexyle, heptyle ou 2-méthyl-hexyle, un sel d'un composé de formule I protoné et un premier anion ou un mélange correspondant, à la pulpe aqueuse préparée du minerai et éventuellement un ou plusieurs auxiliaires de flottation pour obtenir un mélange aqueux,

(d) aération du mélange aqueux dans une cellule de flottation pour générer une écume, qui est enrichie en contenu de silicate, et élimination de l'écume générée de la cellule de flottation,
(e) obtention, à partir de la cellule de flottation, du concentré enrichi en contenu de minéral de fer.

**3.** Procédé selon la revendication 1 ou 2,

à l'étape (c) une deuxième amine étant en outre ajoutée, qui est
(B) un composé de formule II

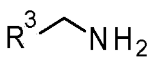 (II)

,

$R^3$ étant un $C_5$-$C_{17}$ alkyle, qui est ramifié ou linéaire, ou un $C_5$-$C_{17}$ alcényle, qui est ramifié ou linéaire, un sel d'un composé de formule II protoné et un deuxième anion ou un mélange correspondant.

**4.** Procédé selon une quelconque revendication précédente, $R^1$ et $R^2$ étant indépendamment l'un de l'autre méthyle, éthyle, propyle, 1-méthyl-éthyle, butyle ou pentyle, préférablement propyle.

**5.** Procédé selon l'une quelconque des revendications 3 à 5, $R^3$ étant un $C_7$-$C_{12}$ alkyle, qui est ramifié ou linéaire, préférablement 1-éthyl-pentyle.

**6.** Procédé selon une quelconque revendication précédente, le premier anion étant $C_1$-$C_{18}$ carboxylate, fluorure, chlorure, bromure, iodure, sulfonate, hydrogénosulfonate, sulfate, dihydrogénophosphate, hydrogénophosphate, phosphate, nitrate, hydrofluorosilicate, fluorosilicate ou un mélange correspondant.

**7.** Procédé selon l'une quelconque des revendications 3 à 6, le deuxième anion étant $C_1$-$C_{18}$ carboxylate, fluorure, chlorure, bromure, iodure, sulfonate, hydrogénosulfonate, sulfate, dihydrogénophosphate, hydrogénophosphate, phosphate, nitrate, hydrofluorosilicate, fluorosilicate ou un mélange correspondant.

**8.** Procédé selon une quelconque revendication précédente, tous les minéraux de fer dans le minerai étant des minéraux de fer non sulfidiques.

**9.** Procédé selon une quelconque revendication précédente, le minéral de fer dans le minerai contenant un oxyde de fer.

**10.** Procédé selon la revendication 9, le minéral de fer contenant de l'hématite, de la magnétite ou de la goethite ou un mélange de deux ou trois correspondant.

**11.** Procédé selon une quelconque revendication précédente, à l'étape (b) un ou plusieurs auxiliaires de flottation étant ajoutés et l'un des auxiliaires de flottation étant un agent dépressant, un régulateur d'écume, un co-collecteur ou une huile d'extension.

**12.** Procédé selon la revendication 11, un agent dépressant étant ajouté en tant qu'auxiliaire de flottation et l'agent dépressant étant un amidon.

**13.** Utilisation d'une première amine (A) comme collecteur de flottation pour la fabrication d'un concentré enrichi en contenu de minéral de fer à partir d'un minerai, qui contient un minéral de fer et du silicate, par une flottation inverse, **caractérisée en ce que** la première amine (A) est un composé de formule I, un sel d'un composé de formule I protoné et un premier anion ou un mélange correspondant comme défini dans la revendication 1.

**14.** Utilisation selon la revendication 13, une combinaison de la première amine (A) et d'une deuxième amine (B) étant utilisée comme collecteur de flottation pour la fabrication d'un concentré enrichi en contenu de minéral de fer à partir d'un minerai, qui contient un minéral de fer et du silicate, par une flottation inverse, et la deuxième amine (B) étant un composé de formule II, un sel d'un composé de formule II protoné ou un mélange correspondant comme défini dans la revendication 3.

**15.** Composition non adhésive pour une utilisation comme collecteur de flottation, qui comprend

(A) une première amine, qui est un composé de formule I, un sel d'un composé de formule I protoné et un premier anion ou un mélange correspondant comme défini dans la revendication 1, et
(B) une deuxième amine, qui est un composé de formule II, un sel d'un composé de formule II protoné et un premier anion ou un mélange correspondant comme défini dans la revendication 3,

le rapport en poids entre la première amine (A) et la deuxième amine (B) étant dans une plage de 0,2 à 1.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- GB 578695 A
- DE 1173041
- EP 0174866 A
- US 20150096925 A
- US 3817972 A
- US 4797202 A
- US 2020172767 A


### Non-patent literature cited in the description


- **F. NAKHAEI et al.** *Miner. Process. Extr. Metall. Rev.,* 2017
- *CHEMICAL ABSTRACTS,* 104-75-6
- *CHEMICAL ABSTRACTS,* 67785-97-1
- *CHEMICAL ABSTRACTS,* 102-83-0
- *CHEMICAL ABSTRACTS,* 3529-07-7
- *CHEMICAL ABSTRACTS,* 7173-57-1
- Separation Efficiency. **NORMAN F. SCHULZ.** Annual Meeting of the American Institute of Mining, Metallurgical and Petroleum Engineers, Washington, D.C. Society of Mining Engineers of AIME, 1969